Europäisches Patentamt

European Patent Office

Office européen des brevets

(11) Publication number: **0 142 485 B1**

(12) **EUROPEAN PATENT SPECIFICATION**

(45) Date of publication of patent specification: **01.03.89**

(51) Int. Cl.⁴: **A 01 N 25/04,** A 01 N 43/70 // (A01N43/70, 37:26)

(21) Application number: **84870135.5**

(22) Date of filing: **17.09.84**

(54) Emulsion flowable formulation containing a mixture of alachlor/atrazine as the active agent.

(30) Priority: **19.09.83 US 533696**

(43) Date of publication of application:
**22.05.85 Bulletin 85/21**

(45) Publication of the grant of the patent:
**01.03.89 Bulletin 89/09**

(84) Designated Contracting States:
**AT BE CH DE FR GB IT LI LU NL**

(56) References cited:
**EP-A-0 010 972
EP-A-0 063 867
EP-A-0 070 702
EP-A-0 088 049**

(73) Proprietor: **MONSANTO COMPANY
Patent Department 800 North Lindbergh
Boulevard
St. Louis, Missouri 63166 (US)**

(72) Inventor: **Henriet, Michel Maurice
19 rue Octave Lotin
B-5861 Cortil-Noirmont (BE)**
Inventor: **Mitchell, Robert William
21 Val Villers
B-5872 Corry-le-Grand (BE)**
Inventor: **Prill, Erhard John
1215 Lockett Lane
Kirkwood Missouri 63122 (US)**

(74) Representative: **Lunt, John Cooper et al
Monsanto Europe S.A. Patent Department
Avenue de Tervuren 270-272 Letter Box No 1
B-1150 Brussels (BE)**

The file contains technical information
submitted after the application was filed and
not included in this specification

Courier Press, Leamington Spa, England.

## Description

This invention relates to an emulsion flowable formulation containing a mixture of 2-chloro-2′,6′-diethyl-N-(methoxymethyl)acetanilide (commonly known as alachlor) and 2-chloro-4-ethylamino-6-iso-propylamino-1,3,5-triazine (commonly known as atrazine) as the active herbicidal agent. An emulsion flowable formulation consists of three phases: an organic phase (discontinuous phase) dispersed in an aqueous phase, (the continuous phase) i.e., an oil-in-water emulsion, and a solid phase dispersed throughout the continuous phase. In the formulation of this invention, alachlor dissolved in organic solvent forms the organic or discontinuous phase which is dispersed throughout the aqueous or continuous phase. The solid phase, atrazine, is also dispersed throughout the continuous phase.

Various formulations of alachlor are known in the art. For example, alachlor is sold by Monsanto Company as an emulsifiable concentrate formulation, and as a granular formulation. The active ingredient in the formulated state is sold under the name LASSO® herbicide. Various formulations of atrazine are known in the art, e.g., as a water-base flowable, and also as a water dispersible granule. It is known in the art to tank-mix alachlor and atrazine and it is further known to combine alachlor and atrazine as a one-package mixture. Monsanto Company sells a one package mixture of alachlor/atrazine under the tradename LASSO® AND ATRAZINE; this formulation is an emulsion flowable. Monsanto also sells a LASSO/ATRAZINE ready-mix formulation based on trichloroethane and perchloroethylene organic solvent.

EP—A—0 088 049 discloses flowable herbicidal compositions containing an active component combination of at least one chlorotriazine and at least one chloroacetanilide, and a surfactant component which consists of an anionic surfactant which is a mono- or diphosphoric acid ester of a phenol polyglycol ether, and at least one non-ionic surfactant which is an alkoxy-, alkanoyloxy- or phenol-polyglycol ether.

One of the limitations of the alachlor/atrazine formulation based on trichloroethane and perchloroethylene solvents is the quality of the technical atrazine used in the formulation. Some atrazine sources cannot be used in this type of formulation due to the severe viscosity increase and partial gelling effect the quality of the atrazine has on the final formulation. This is particularly the case with high water content atrazine or atrazine processed by a water-based procedure as opposed to an organic solvent based method. Since the quality of the alachlor/atrazine solvent based formulation is dependent on the quality of the atrazine used in said formulation, the agricultural formulation is restricted in the choice of supplier of the atrazine.

Surprisingly, it has been found that the formulation of the present invention allows complete freedom with respect to the quality of atrazine used in the formulation. One of the major differences between this formulation and the solvent based alachlor/atrazine formulation is that more than half of the organic solvent level in the prior art formulation is replaced by water. Since the amount of solvent in the formulation is reduced, there is reduced environmental/toxicological concerns due to the replacement of perchloroethylene and trichloroethane solvents by monochlorobenzene or by xylene with an overall solvent reduction of approximately 57%.

The present invention offers the advantage that one is able to formulate an active agent which is readily soluble in organic solvents, i.e., alachlor, along with a solid active agent which is mostly insoluble in water or organic solvents, to produce a one-package mixture wherein the amount of organic solvent used in the formulation is greatly reduced when compared to the known emulsifiable concentrate formulations of alachlor herbicide.

### Detailed Description of the Invention

The present invention is directed to an emulsion flowable formulation comprising the following ingredients:

| Components | Percent by Weight |
|---|---|
| Alachlor | 25.0—40.0 |
| Solvent | 10.0—30.0 |
| Emulsifier | 3.0—10.0 |
| Atrazine | 5.0—25.0 |
| Stabilizer | 0.1— 2.0 |
| Antifreeze Agent | 1.5—10.0 |
| Formulation Adjuvants | 0.0— 5.0 |
| Water | Balance |
|  | 100.0 |

The term "active herbicidal agent" as used herein refers to a mixture of alachlor (2-chloro-2',6'-diethyl-N-(methoxymethyl) acetanilide and atrazine (2-chloro-4-ethylamino-6-isopropylamino-1,3,5-triazine). The preparation and herbicidal use of alachlor is described in U.S. Patent No. 3,442,945 and 3,547,620. The preparation and herbicidal use of atrazine is described in U.S. Patent No. 2,891,855.

Alachlor is present in the formulation at from 25.0% to 40.0% by weight of the composition, preferably from 27.5% to 35.0% by weight of the composition and most preferably at from 30.0% to 32.0% by weight of the composition. Atrazine is present in the formulation at from 5.0% to 25.0% by weight of the composition, preferably at from 10.0% to 20.0% by weight and most preferably from 13.0% to 18.0% by weight of the composition.

The solvent used in the formulation is a hydrocarbon or an halogenated aromatic hydrocarbon. It can be a single organic solvent or may be a blend of two or more such materials. The solvent useful herein is one which is nonreactive to the herbicidal mixture and in which the herbicidal mixture, i.e., alachlor, readily dissolves and which is substantially immiscible with water. Examples of suitable solvents include aromatic hydrocarbons such as xylene, trimethyl benzene, C9 aromatics, polynuclear aromatic hydrocarbons such as naphthalene and alkyl naphthalenes, halogenated aromatic hydrocarbons such as monochlorobenzene and *ortho*-chlorotoluene. The preferred hydrocarbon solvent for use herein is monochlorobenzene (MCB) or xylene.

The hydrocarbon solvent is present in the formulation at from 10.0% to 30.0% by weight of the composition, preferably at from 17.5% to 25.0% by weight and most preferably from 18.0% to 21.0% by weight of the composition.

The emulsifying agents used herein can be mixtures of emulsifying agents, and may be blends of nonionic and anionic surfactants. Suitable emulsifiers which may be specifically named are described in detail below.

"Flo Mo" 50H and 60H, a calcium alkyl aryl sulfonate anionic emulsifier; "Flo Mo" XHA, an ethylene oxide/propylene oxide block co-polymer, butanol, nonionic emulsifier; "Flo Mo" 14D, a dodecyl phenol ethoxylate, nonionic emulsifier; and "Flo Mo" 54C, a polyethoxylated caster oil, nonionic emulsifier, have been found to be useful in the present invention. Also, as shown in Table I, various blends of these materials are useful in the formulations of the present invention. All of the "Flo Mo" emulsifiers are manufactured by Sellers Chemical Corporation, 1320 Sams Avenue, P.O. Box 23523, Harahan, Louisiana, 70183.

## TABLE I

| "Flo Mo LHF-N" | | "Flo Mo LEH" | | "Flo Mo LHF" | |
|---|---|---|---|---|---|
| Component | Percent By Weight | Component | Percent By Weight | Component | Percent By Weight |
| Flo Mo XHA | 24.80 | Flo Mo 50H | 40.60 | Flo Mo 50H | 51.00 |
| Flo Mo 14D | 58.90 | Flo Mo XHA | 14.73 | Flo Mo 14D | 12.15 |
| Flo Mo 54C | 9.30 | Flo Mo 54C | 34.99 | Flo Mo 54C | 4.65 |
| *T-400/AN2K | 7.00 | T-400/AN2K | 4.16 | T-400/AN2K | 3.43 |
| | 100.00 | | 100.00 | | 100.00 |

*T-400 is a blend of C9 aromatics manufactured by Tenneco Chemicals, Inc.

Penasol AN2K is a blend of kerosene and heavy aromatic napthas manufactured by Ammoco.

EP 0 142 485 B1

Other emulsifiers which may be mentioned are "Atlox" 4880B, 4890B, and 4900B which are blends of anionic/nonionic emulsifiers typically calcium alkyl aryl sulfonate/nonionic blends; the HLB of these blends will range from about 11.3 to 12.8; these emulsifiers are manufactured by Atlas Chemical Industries N.V., Everslaan 45, B—3078 Everberg, Belgium, or in the U.S.A. by ICI Americas Inc., New Murphy Road and Concord Pike, Wilmington, Delaware, 19897. "Berol" 930, 938, and 947, which are combined anionic/nonionic emulsifiers, typically, mixtures of calcium dodecylbenzene sulfonate with an ethoxylated/propoxylated nonyl phenol materials are specially intended for emulsifying pesticides and have also been found to be useful in the composition of the present invention. "Berol" 948 is an ethoxylated/propoxylated nonyl phenol (nonionic) which is also suitable for use herein. These emulsifiers are manufactured by Berol Kemi AB, S—44401 Stenungsund 1, Sweden.

The anionic/nonionic or mixtures of emulsifiers will be present in the formulation of the present invention at from 3.0% to 10.0% by weight of the composition, preferably from 4.0 to 8.0% by weight and most preferably from 6.0% to 7.0% by weight of the composition.

The term "Stabilizer" as used herein refers to a material which is used at relatively low concentrations in the formulation of the invention and which acts to prevent loss of emulsifier activity during long term storage of the formulation. The materials which have been found to be useful herein are magnesium oxide (MgO), magnesium hydroxide, dolomite ($MgCO_3CaCO_3$), calcium hydroxide, ammonium bicarbonate, sodium bicarbonate, and sodium metasilicate. Preferred for use herein is magnesium oxide. The stabilizer will be present in the formulations of the invention at from 0.10% to 2.0% by weight, preferably at from 0.50% to 1.0% by weight and most preferably at about 0.6% by weight.

Lower alkyl glycols, e.g., ethylene or propylene glycol, are used in the formulations of the invention as antifreeze agents. Amounts of these components ranging from 1.5% to 10.0% by weight of the composition, preferably from 1.0% to 5.0% by weight and most preferably at from 1.5% to 2.5% by weight of the total composition will adequately provide the composition with the desired antifreeze protection.

Minor quantities, i.e., from 0% to 5.0% by weight of the composition of one or more inert formulation adjuvants such as anti-foaming agents, biocides, dyes, anti-corrosion agents, may be incorporated into the emulsion flowable formulation of the present invention, especially if said formulations are to be stored for any extended period of time prior to use, particularly under adverse storage conditions.

Silicone anti-foaming agents are "formulation adjuvants" which are frequently used in the compositions of this invention. Silicone anti-foaming agents are exemplified by the following commercially available anti-foam agents: "Antifoam F1", manufactured by Hodag Chemical Corporation, 7247 Central Park Avenue, Skokie, Illinois 60076; "Mazu DF 100S", available from Mazer Chemicals, Incorporated, 3938 Porett Drive, Gurnee, Illinois 60031; "Rhodorsil 426R", manufactured by Rhone-Poulenc, 33 Rue Jean Goujon, 75360 Paris, France; and "Sag 47", sold by Union Carbide Corporation, 270 Park Avenue, New York, New York 10017. From 0.01% to 0.20% by weight of the defoaming agent has been found to be useful in the present invention, preferably from 0.02% to 0.04% by weight of total composition is used herein.

The novel emulsion flowable formulations of this invention are prepared according to the following procedure:

1. The organic phase is prepared containing the emulsifier(s), molten technical alachlor and organic solvent; alachlor is melted at 50°C and added to the organic solvent followed by addition of the emulsifier mixture.

2. The organic phase, maintained at above 30°C, is added to the water, which is maintained at 15°C to 20°C, under either high or low shear conditions. Typically, temperatures of 18°C for the aqueous phase, and 30°C for the organic phase, have been used at the moment of addition. It is important that the temperatures of the aqueous/organic phases do not differ by more than 35°C as it is possible to generate a thermal shock in which microcrystals of alachlor may form in addition to oil-in-water emulsion droplets. The formation of microcrystals may act as nuclei for alachlor crystal growth and/or instability of the formulation.

3. To the formed emulsion the following ingredients are added in the order indicated: antifoam agent, antifreeze agent, and stabilizer. These components are added individually while maintaining either high or low shear agitation conditions.

4. When the oil-in-water emulsion is formed, technical atrazine is slowly added to the emulsion while maintaining agitation.

Any shearing means known to those in the art to be capable of producing sufficient shear to produce dispersion, emulsification, and/or homogenization is suitable for use herein. Illustrative of such shearing means is the "Polytron" homogenizer, sold by Brinkmann Instruments, Inc., Cantiague Road, Westbury, New York, 11590, USA, which utilizes mechanical shearing with sonic energy to effect homogenization, dispersion, or emulsification, the Tekmar, "Dispax Reactor DR 3—916", available from the Tekmar Company, P.O. Box 372021, Cincinnati, Ohio 45222, USA; and the "EX" Silverson homogenizer fitted with high shear emulsion head; the Silverson homogenizer is available from Silverson Machines Ltd., Waterside, Chesham, Buckinghamshire, England HP5 1PQ. An example of a "low shear" means is a paddle agitator having a paddle blade which is 120 mm in diameter, operated at a power setting of 0.75 Kw and a speed of ±1,000 rpm.

Experience indicates that final milling of the finished formulation reduces the atrazine diameter particle size from about 6.0 to around 2.5 µm (microns) which improves the homogenity of the emulsion mixture, thereby reducing sedimentation/settling upon standing.

The formulations of the present invention show excellent emulsification characteristics in all water hardnesses and from water temperatures of 7°C to 25°C. The formulations of the invention survive one month accelerated aging at 60°C without any significant deterioration in quality or degradation of active substances. The formulation of the invention will freeze at −10°C, but the extremely small trace quantities of alachlor crystals which develop after two weeks at this temperature are totally emulsified upon warming to room temperature (15°C to 20°C). The formulations of the invention have been satisfactorily processed using poor quality technical atrazine which would gel a solvent based emulsifiable concentrate type formulation upon long term storage.

The following examples are illustrative of the concentrated emulsion flowable formulations contemplated by the present invention. Unless otherwise indicated, all examples were prepared according to the procedure described above.

Example 1

| Ingredient | A Percent By Weight | B Percent By Weight |
|---|---|---|
| Alachlor (92.6%) | 33.12 | 34.40 |
| Xylene | — | 16.05 |
| Monochlorobenzene | 20.81 | — |
| Atlox 4880B | 3.60 | — |
| Atlox 4890B | 2.40 | 5.60 |
| Atlox 4900B | — | 0.40 |
| Atrazine (97%) | 13.55 | 14.08 |
| Magnesium Oxide | 0.60 | 0.60 |
| Rhodorsil 426R | 0.04 | 0.04 |
| Ethylene Glycol | 2.50 | 2.50 |
| Water | 23.38 | 26.33 |
|  | 100.00 | 100.00 |

# EP 0 142 485 B1

## Example 2

| Ingredient | A<br>Percent<br>By Weight | B<br>Percent<br>By Weight |
|---|---|---|
| Alachlor (92.6%) | 33.12 | 34.40 |
| Xylene | — | 16.05 |
| Monochlorobenzene | 20.81 | — |
| Berol 930 | — | 2.00 |
| Berol 938 | — | 4.00 |
| Berol 947 | 4.00 | — |
| Berol 948 | 2.00 | — |
| Atrazine (97%) | 13.55 | 14.08 |
| Magnesium Oxide | 0.60 | 0.60 |
| Rhodorsil 426R | 0.04 | 0.04 |
| Ethylene Glycol | 2.50 | 2.50 |
| Water | 23.38 | 26.33 |
| | 100.00 | 100.00 |

## Example 3

| Ingredient | A<br>Percent<br>By Weight | B<br>Percent<br>By Weight |
|---|---|---|
| Alachlor (92.6%) | 34.52 | 35.25 |
| Xylene | — | 13.12 |
| Monochlorobenzene | 18.77 | — |
| Atlox 4880B | 4.80 | — |
| Atlox 4890B | 3.20 | 7.40 |
| Atlox 4900B | — | 0.60 |
| Atrazine (97%) | 18.83 | 19.23 |
| Magnesium Oxide | 0.60 | 0.60 |
| Rhodorsil 426R | 0.04 | 0.04 |
| Ethylene Glycol | 2.50 | 2.50 |
| Water | 16.74 | 21.26 |
| | 100.00 | 100.00 |

7

## Example 4

| Ingredient | A. Percent By Weight | B Percent By Weight |
|---|---|---|
| Alachlor (92.6%) | 34.52 | 35.25 |
| Xylene | — | 12.82 |
| Monochlorobenzene | 18.77 | — |
| Berol 930 | — | 2.50 |
| Berol 938 | — | 4.50 |
| Berol 947 | 5.00 | — |
| Berol 948 | 2.00 | — |
| Atrazine (97%) | 18.83 | 19.23 |
| Magnesium Oxide | 0.60 | 0.60 |
| Rhodorsil 426R | 0.04 | 0.04 |
| Ethylene Glycol | 2.50 | 2.50 |
| Water | 17.74 | 22.56 |
| | 100.00 | 100.00 |

## Example 5

| Ingredients | Percent By Weight |
|---|---|
| Alachlor (93.8%) | 32.70 |
| Monochlorobenzene | 21.00 |
| Atlox 4880B | 3.60 |
| Atlox 4890B | 2.40 |
| Atrazine (97.0%) | 13.55 |
| Magnesium Oxide | 0.60 |
| Rhodorsil 426R | 0.02 |
| Ethylene Glycol | 1.50 |
| Water | 24.63 |
| | 100.00 |

8

# EP 0 142 485 B1

## Example 6

| Ingredients | Percent By Weight |
|---|---|
| Alachlor (93.8%) | 34.08 |
| Monochlorobenzene | 19.00 |
| Atlox 4880B | 4.80 |
| Atlox 4890B | 3.20 |
| Atrazine (97.0%) | 18.83 |
| Magnesium Oxide | 0.60 |
| Rhodorsil 426R | 0.02 |
| Ethylene Glycol | 1.50 |
| Water | 17.97 |
| | 100.00 |

The emulsion flowable alachlor/atrazine compositions of this invention can be used as a preemergence herbicide to selectively control weeds in crops, particularly corn and grain sorghum. The compositions can be applied at rates of 0.44—0.66 g/m$^2$ (4 to 6 pounds per acre). The exact rate to be used will depend upon the crop, the soil type, the climate, and the weeds to be controlled. The treatment will control grasses and certain broadleaved weeds. The exact rate to be used can be readily selected by one skilled in the art from the available literature.

The following example illustrates the herbicidal efficacy of several emulsion flowable formulations of the invention when compared with a commercially available LASSO®/ATRAZINE solvent based formulation.

## Example 7

The results reported below are actual field results. The pre-emergence activity of a commercial LASSO/ATRAZINE solvent based formulation containing 480 g/L of active agent were compared to several emulsion flowable formulations of the present invention. The treatments were applied to fields of maize infested with *Echinochloa crus-galli, Amaranthus retroflexus, Solanum nigrum*, and *Chenopodium album*. The results are summarized in Table I.

9

TABLE I

| Formulation | RATE OF APPLICATION | PERCENT PHYTOTOXICITY | | | | |
|---|---|---|---|---|---|---|
| | Kg ai/Ha | Maize var. brutus | E. crus-galli | A. nitroflexus | S. nigrum | C. album |
| Example 5 | 3.00 | 5 | 100 | 100 | 100 | 100 |
| | 1.50 | 0 | 98 | 100 | 100 | 100 |
| | 0.75 | 0 | 100 | 100 | 100 | 100 |
| | 0.38 | 0 | 100 | 100 | 100 | 100 |
| | 0.19 | 3 | 100 | 100 | 100 | 100 |
| Commercial | 3.00 | 0 | 98 | 100 | 98 | 98 |
| | 1.50 | 0 | 100 | 100 | 100 | 100 |
| | 0.75 | 0 | 100 | 100 | 98 | 98 |
| | 0.38 | 0 | 100 | 100 | 98 | 100 |
| | 0.19 | 0 | 100 | 100 | 90 | 98 |
| Example 1B | 3.00 | 0 | 100 | 100 | 100 | 100 |
| | 1.50 | 0 | 100 | 100 | 95 | 100 |
| | 0.75 | 0 | 100 | 100 | 98 | 98 |
| | 0.38 | 0 | 98 | 100 | 90 | 98 |
| | 0.19 | 0 | 93 | 100 | 98 | 98 |
| Example 2B | 3.00 | 5 | 100 | 100 | 98 | 100 |
| | 1.50 | 0 | 100 | 100 | 93 | 100 |
| | 0.75 | 3 | 100 | 90 | 90 | 95 |
| | 0.38 | 0 | 93 | 98 | 90 | 88 |
| | 0.19 | 0 | 93 | 98 | 75 | 98 |

* Percent phytoxocity when compared to untreated control plants.

EP 0 142 485 B1

TABLE I
(Continued)

| Formulation | RATE OF APPLICATION Kg ai/Ha | PERCENT PHYTOTOXICITY | | | | |
|---|---|---|---|---|---|---|
| | | Maize var. brutus | E. crus-galli | A. nitroflexus | S. nigrum | C. album |
| Commercial | 3.00 | 8 | 100 | 100 | 98 | 100 |
| | 1.50 | – | 100 | 100 | 95 | 100 |
| | 0.75 | 0 | 98 | 100 | 93 | 95 |
| | 0.38 | 0 | 98 | 95 | 93 | 90 |
| | 0.19 | 0 | 90 | 78 | 83 | 83 |
| Example 3A | 3.00 | 10 | 100 | 100 | 100 | 100 |
| | 1.50 | 3 | 100 | 100 | 98 | 100 |
| | 0.75 | 0 | 100 | 100 | 100 | 98 |
| | 0.38 | 0 | 100 | 100 | 98 | 98 |
| | 0.19 | 0 | 09 | 100 | 100 | 88 |
| Example 4A | 3.00 | 0 | 100 | 100 | 98 | 100 |
| | 1.50 | 0 | 98 | 100 | 98 | 100 |
| | 0.75 | 0 | 100 | 100 | 98 | 95 |
| | 0.38 | 0 | 100 | 98 | 98 | 93 |
| | 0.19 | 0 | 98 | 100 | 95 | 93 |
| Commercial | 3.00 | 5 | 100 | 100 | 100 | 100 |
| | 1.50 | 0 | 100 | 100 | 100 | 100 |
| | 0.75 | 0 | 100 | 100 | 95 | 90 |
| | 0.38 | 0 | 98 | 100 | 95 | 95 |
| | 0.19 | 0 | 98 | 93 | 68 | 80 |

* Percent phytoxocity when compared to untreated control plants.

TABLE I
(Continued)

| Formulation | RATE OF APPLICATION Kg ai/Ha | PERCENT PHYTOTOXICITY | | | | |
|---|---|---|---|---|---|---|
| | | Maize var. brutus | E. crus-galli | A. nitroflexus | S. nigrum | C. album |
| Example 3B | 3.00 | 5 | 100 | 100 | 100 | 100 |
| | 1.50 | 0 | 100 | 100 | 98 | 100 |
| | 0.75 | 0 | 100 | 100 | 95 | 100 |
| | 0.38 | 0 | 93 | 100 | 95 | 95 |
| | 0.19 | 0 | 100 | 93 | 83 | 95 |
| Example 4B | 3.00 | 0 | 100 | 100 | 98 | 100 |
| | 1.50 | 0 | 100 | 100 | 95 | 100 |
| | 0.75 | 0 | 100 | 100 | 95 | 98 |
| | 0.38 | 0 | 98 | 100 | 93 | 95 |
| | 0.19 | 0 | 83 | 100 | 90 | 95 |
| Commercial | 3.00 | 0 | 100 | 100 | 98 | 100 |
| | 1.50 | 5 | 100 | 100 | 98 | 100 |
| | 0.75 | 0 | 100 | 100 | 98 | 100 |
| | 0.38 | 0 | 98 | 100 | 95 | 98 |
| | 0.19 | 0 | 95 | 100 | 88 | 93 |

* Percent phytotoxicity when compared to untreated control plants.

**Claims**

1. An emulsion flowable herbicidal composition comprising the following components:
   A. from 25.0% to 40.0% by weight of 2-chloro-2',6'-diethyl-N-(methoxymethyl)acetanilide;
   B. from 10.0% to 30.0% by weight of a solvent which is a hydrocarbon or an halogenated aromatic hydrocarbon;
   C. from 3.0% to 10.0% by weight of an emulsifier;
   D. from 5.0% to 25.0% by weight of 2-chloro-4-ethylamino-6-isopropylamino-1,3,5-triazine herbicide;
   E. from 0.10% to 2.0% by weight of a stabilizer;
   F. from 1.5% to 10.0% by weight of an antifreeze agent;
   G. from 0 to 5.0% by weight of formulation adjuvants;
   H. balance being made up of water.

2. A composition according to Claim 1 comprising
   A. from 27.5% to 35.0% by weight of 2-chloro-2',6'-diethyl-N-(methoxymethyl)acetanilide;
   B. from 17.5% to 25.0% by weight of a solvent which is a hydrocarbon or an halogenated aromatic hydrocarbon;
   C. from 4.0% to 8.0% by weight of an emulsifier;
   D. from 10.0% to 20.0% by weight of 2-chloro-4-ethylamino-6-isopropylamino-1,3,5-triazine herbicide;
   E. from 0.05% to 1.0% by weight of a stabilizer;
   F. from 1.0% to 5.0% by weight of an antifreeze agent;
   G. from 0.1% to 0.2% by weight of formulation adjuvants; and
   H. balance being made up of water.

3. A composition according to either of Claims 1 and 2 wherein the solvent is monochlorobenzene or xylene.

4. A composition according to any of Claims 1 to 3 wherein said emulsifier is selected from calcium alkyl aryl sulfonates, dodecyl phenol ethoxylates, polyoxyethylene ethers, ethylene oxide/propylene oxide block copolymers on butanol, and ethoxylated/propoxylated nonyl phenols.

5. A composition according to Claim 4 wherein said emulsifier is a mixture of calcium alkyl aryl sulfonate and ethoxylated/propoxylated nonyl phenol.

6. A composition according to any of Claims 1 to 5 wherein said stabilizer is magnesium oxide.

7. A composition according to any of Claims 1 to 6 wherein said antifreeze agent is ethylene glycol or propylene glycol.

8. A composition according to any of Claims 1 to 7 wherein said formulation adjuvant is a silicone anti-foam agent.

9. An emulsion flowable composition comprising the following components:
   A. from 30.0% to 32.0% by weight of 2-chloro-2',6'-diethyl-N-(methoxymethyl)acetanilide herbicide;
   B. from 18.0% to 21.0% by weight of monochlorobenzene;
   C. from 6.0% to 7.0% by weight of a mixture of calcium alkyl aryl sulfonate and ethoxylated/propoxylated nonyl phenol;
   D. from 13.0% to 18.0% by weight of 2-chloro-4-ethylamino-6-isopropylamino-1,3,5-triazine herbicide;
   E. 0.6% by weight of magnesium oxide;
   F. from 1.5% to 2.5% by weight of ethylene glycol;
   G. from 0.02% to 0.04% by weight of a silicone anti-foam agent; and
   H. balance being made up of water.

**Patentansprüche**

1. Fließfähige herbizide Emulsionszusammensetzung umfassend die folgenden Bestandteile:
   A. 25,0 bis 40,0 Gew.% 2-Chlor-2',6'-diäthyl-N-(methoxymethyl)acetanilid,
   B. 10,0 bis 30,0 Gew.% eines Lösungsmittels, das ein Kohlenwasserstoff oder ein halogenierter aromatischer Kohlenwasserstoff ist,
   C. 3,0 bis 10,0 Gew.% eines Emulgators,
   D. 5,0 bis 25,0 Gew.% 2-Chlor-4-äthylamino-6-isopropylamino-1,3,5-triazin-Herbizid,
   E. 0,10 bis 2,0 Gew.% eines Stabilisators,
   F. 1,5 bis 10,0 Gew.% eines Frostschutzmittels,
   G. 0 bis 5,0 Gew.% Formulierungsadjuvantien und
   H. Rest Wasser.

2. Zusammensetzung nach Anspruch 1 umfassend
   A. 27,5 bis 35,0 Gew.% 2-Chlor-2',6'-diäthyl-N-(methoxymethyl)acetanilid,
   B. 17,5 bis 25,0 Gew.% eines Lösungsmittels, das ein Kohlenwasserstoff oder ein halogenierter aromatischer Kohlenwasserstoff ist,
   C. 4,0 bis 8,0 Gew.% eines Emulgators,
   D. 10,0 bis 20,0 Gew.% 2-Chlor-4-äthylamino-6-isopropylamino-1,3,5-triazin-Herbizid,
   E. 0,05 bis 1,0 Gew.% eines Stabilisators,
   F. 1,0 bis 5,0 Gew.% eines Frostschutzmittels,

G. 0,1 bis 0,2 Gew.% Formulierungsadjuvantien und

H. Rest Wasser.

3. Zusammensetzung nach einem der Ansprüche 1 und 2, worin das Lösungsmittel Monochlorbenzol oder Zylol ist.

4. Zusammensetzung nach einem der Ansprüche 1 bis 3, worin der Emulgator ausgewählt ist aus Calciumalkylarylsulfonaten, Dodecylphenoläthoxylaten, Polyoxyäthylenäthern, Äthylenoxid/Propylenoxid-Blockcopolymeren auf Butanol und äthoxylierten/propoxylierten Nonylphenolen.

5. Zusammensetzung nach Anspruch 4, worin der Emulgator eine Mischung von Calciumalkylarylsulfonat und äthoxyliertem/propoxyliertem Nonylphenol ist.

6. Zusammensetzung nach einem der Ansprüche 1 bis 5, worin der Stabilisator Magnesiumoxid ist.

7. Zusammensetzung nach einem der Ansprüche 1 bis 6, worin das Frostschutzmittel Äthylenglykol oder Propylenglykol ist.

8. Zusammensetzung nach einem der Ansprüche 1 bis 7, worin das Formulierungsadjuvans ein Silikonschaumverhütungsmittel ist.

9. Fließfähige Emulsionszusammensetzung umfassend die folgenden Bestandteile:

A. 30,0 bis 32,0 Gew.% 2-Chlor-2',6'-diäthyl-N-(methoxymethyl)-acetanilid-Herbizid,

B. 18,0 bis 21,0 Gew.% Monochlorbenzol,

C. 6,0 bis 7,0 Gew.% einer Mischung von Calciumalkylarylsulfonat und äthoxyliertem/propoxyliertem Nonylphenol,

D. 13,0 bis 18,0 Gew.% 2-Chlor-4-äthylamino-6-isopropylamino-1,3,5-triazin-Herbizid,

E. 0,6 Gew.% Magnesiumoxid,

F. 1,5 bis 2,5 Gew.% Äthylenglykol,

G. 0,02 bis 0,04 Gew.% Silikonschaumverhütungsmittel und

H. Rest Wasser.

## Revendications

1. Composition herbicide capable de s'écouler, sous forme d'émulsion, comprenant les constituants suivants:

A. de 25,0% à 40,0% en poids de 2-chloro-2',6'-diéthyl-N-(méthoxyméthyl)acétanilide;

B. de 10,0% à 30,0% en poids d'un solvant qui est un hydrocarbure ou un hydrocarbure aromatique halogéné;

C. de 3,0% à 10,0% en poids d'un émulsionnant;

D. de 5,0% à 25,0% en poids d'un herbicide, la 2-chloro-4-éthylamino-6-isopropylamino-1,3,5-triazine;

E. de 0,10% à 2,0% en poids d'un stabilisant;

F. de 1,5% à 10,0% en poids d'un antigel;

G. de 0 à 5,0% en poids d'adjuvants de formulation;

H. le reste étant constitué d'eau.

2. Composition selon la revendication 1, comprenant:

A. de 27,5% à 35,0% en poids de 2-chloro-2',6'-diéthyl-N-(méthoxyméthyl)acétanilide;

B. de 17,5% à 25,0% en poids d'un solvant qui est un hydrocarbure ou un hydrocarbure aromatique halogéné;

C. de 4,0% à 8,0% en poids d'un émulsionnant;

D. de 10,0% à 20,0% en poids d'un herbicide, la 2-chloro-4-éthylamino-6-isopropylamino-1,3,5-triazine;

E. de 0,05% à 1,0% en poids d'un stabilisant;

F. de 1,0% à 5,0% en poids d'un antigel;

G. de 0,1% à 0,2% en poids d'adjuvants de formulation;

H. le reste étant constitué d'eau.

3. Composition selon l'une ou l'autre des revendications 1 et 2, dans laquelle le solvant est le monochlorobenzène ou le xylène.

4. Composition selon l'une quelconque des revendications 1 à 3, dans laquelle cet émulsionnant est choisi parmi les alkylarylsulfonates de calcium, les éthoxylates de dodécylphénol, les éthers de polyoxy-éthylène, les copolymères séquencés oxyde d'éthylène/oxyde de propylène dans du butanol, et les nonyl-phénols éthoxylés/propoxylés.

5. Composition selon la revendication 4, dans laquelle cet émulsionnant est un mélange d'alkylaryl-sulfonate de calcium et de nonylphénol éthoxylé/propoxylé.

6. Composition selon l'une quelconque des revendications 1 à 5, dans laquelle ce stabilisant est l'oxyde de magnésium.

7. Composition selon l'une quelconque des revendications 1 à 6, dans laquelle cet antigel est l'éthy-lèneglycol ou le propylèneglycol.

8. Composition selon l'une quelconque des revendications 1 à 7, dans laquelle cet adjuvant de formulation est un antimousse à base de silicone.

9. Composition capable de s'écouler, sous forme d'émulsion, comprenant les constituants suivants:

A. de 30,0% à 32,0% en poids d'un herbicide, le 2-chloro-2',6'-diéthyl-N-(méthoxyméthyl)acétanilide;

B. de 18,0% à 21,0% en poids de monochlorobenzène;

C. de 6,0% à 7,0% en poids d'un mélange d'alkylarylsulfonate de calcium et de nonylphénol éthoxylé/propoxylé;

D. de 13,0% à 18,0% en poids d'un herbicide, la 2-chloro-4-éthylamino-6-isopropylamino-1,3,5-triazine;

E. 0,6% en poids d'oxyde de magnésium,

F. de 1,5% à 2,5% en poids d'éthylèneglycol;

G. de 0,02% à 0,04% en poids d'un antimousse à base de silicone; et

H. le rest étant constitué d'eau.